# EUROPEAN PATENT SPECIFICATION

(11) **EP 0 361 773 B1**
(45) Date of publication and mention of the grant of the patent: **29.12.1993**
(21) Application number: 89309567.9
(22) Date of filing: 20.09.1989
(51) Int. Cl.: G21C 19/42, G21F 9/02, G21C 19/313

(54) **Method of recovering radioactive iodine in a spent nuclear fuel retreatment process**
Verfahren zum Wiedergewinnen von Radiojod beim Wiederaufbereitungsverfahren für verbrauchten Kernbrennstoff
Procédé pour la récupération de l'iode radioactif lors du retraitement de combustibles nucléaires irradiés

(30) Priority: 26.09.1988 JP 240069/88
(43) Date of publication of application: 04.04.1990
(73) Proprietor: DORYOKURO KAKUNENRYO KAIHATSU JIGYODAN, Minato-ku Tokyo 107 (JP)
(72) Inventor: Ohtsuka, Katsuyuki Doryokuro Kakunenryo Kaihatsu, Tokai-mura Naka-gun Ibaraki 319-11 (JP); Ohuchi, Jin c/o Doryokuro Kakunenryo Kaihatsu, Tokai-mura Naka-gun Ibaraki 319-11 (JP); Suzuki, Toru c/o Doryokuro Kakunenryo Kaihatsu, Tokai-mura Naka-gun Ibaraki 319-11 (JP)
(74) Representative: Moore, Anthony John

(56) References cited:
- EP-A- 0 261 662
- GB-A- 1 498 080
- US-A- 4 275 045

## Description

This invention relates to a method, applicable to a spent nuclear fuel retreatment process, of recovering by a freeze vacuum drying process radioactive iodine from a scrub solution which may then be disposed of. For stable storage the recovered radioactive iodine may be mineralized.

In a spent nuclear fuel retreatment process, elimination of radioactive iodine generated in the process of dissolving and shearing spent fuel is particularly vital due to the high toxicity of the iodine, the high iodine content of fission products, and the high rate of nuclear fission inherent in the mass index of the two primary types of radioactive iodines, 1% ¹²⁹I at a long (1.7x10⁷ years) half-life and 2.09% ¹³¹I, a brief (eight-day) half-life. When the iodine in the liquids supplied to solvent extraction remains to react with the solvent, it produces a chemical compound resistant to removal, with resultant contamination throughout the entire treatment process, and makes important the removal of as much iodine as is practicable before it comes into contact with the solvent.

In the off-gas phase, aqueous phase or organic phase, iodine appears in I₂, HI, HIO or organic forms and appears as HIO₃ in dense nitrate solutions.

Conventional methods of removing iodine are removal by immersion in alkaline solutions such as Na₂CO₃ or NaOH, or removal also through use of silver zeolite loaded with silver in a zeolite catalyst.

In methods employing alkaline solutions, however, removal of organic iodine is impossible and there is furthermore no way to recover iodine and treat it while maintaining it in solution. Radioactive iodine incapable of maintenance is released into the atmosphere and the accumulation of ¹²⁹I, particularly, with its long half life becomes a problem. In recovering radioactive iodine it is further necessary to utilize such valuable absorbents as silver zeolite. For this purpose a process making possible the suspension of radioactive iodine in a liquid is desirable. As it is vital to store long half-life ¹²⁹I over long periods, a process making possible safe storage of radioactive materials such as recovered ¹²⁹I is desired. In addition, liquid waste containing radioactive iodines generated in the retreatment process should not cause vaporization of radioactive iodines, so it is necessary to control the alkalinity. However, if this liquid waste becomes mixed with acidic liquid wastes, there is the danger that radioactive iodine may be irretrievably released. For this reason, there is need of a process in which liquid containing radioactive iodines may be treated individually without becoming mixed in with liquid wastes from another process.

An object of the present invention is to prevent the release of long-half life ¹²⁹I radioactive iodine into the environment by concentrating liquids containing radioactive iodine by a freeze vacuum drying process and recovering the iodine as iodine compounds.

In an embodiment of the present invention the long term stable storage of radioactive iodine is achieved by mineralizing the recovered iodine compounds.

Another object of the present invention is to treat radioactive iodine while maintaining it in solution and reduce the consumption of an iodine collecting agent such as silver zeolite.

Still another object of the present invention is to avoid the mistaken release of radioactive iodines by separate processing solely of liquids containing radioactive iodine without allowing mixing with waste liquids from other processes.

Lastly, a final object of the present invention is to avoid vaporization of radioactive iodine from liquids. This may be achieved by adding silver and copper ions to liquids containing radioactive iodine, causing the precipitation of radioactive iodine compounds and additives, and separating the radioactive iodine from solution.

In order to attain these objects, the present invention is characterized in that, in a spent fuel retreatment process, generated off-gas is scrubbed, after which the cleaned scrub solution is precipitated alone or with the addition of an additive, followed by freeze drying the radioactive iodine-containing waste solution by a freeze vacuum drying process and recovering the radioactive iodine as an iodine compound. Scrubbing of the off-gas is carried out by using sodium hydroxide solution, and copper and silver ions are added as the additive in the precipitation process. Further, the invention is characterized by solidifying and mineralizing, by a high-pressure press or the like, the iodine compound containing the recovered radioactive iodine directly or after adjusting the compound into a composition of a naturally occurring iodine-containing mineral.

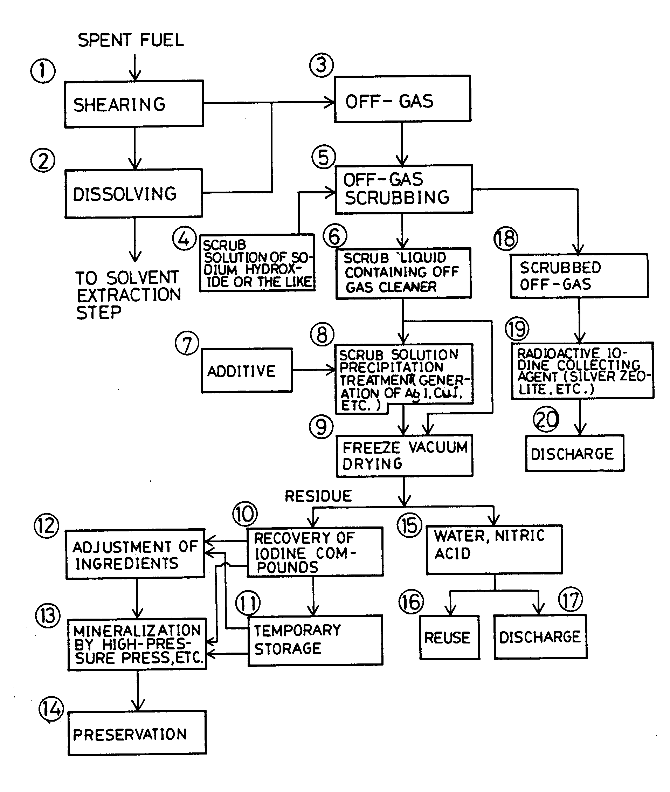

An embodiment of the invention will now be described with reference to the sole Figure of the accompanying drawing which is a flow diagram illustrating the process of radioactive iodine recovery by the freeze vacuum drying process, as well as the method of storage of the product.

The Figure illustrates an example of the process flow in the case where the iodine recovery and storage method of the invention is applied to retreatment processing of spent nuclear fuel. In the Figure, (1) is a shearing step, (2) a dissolving step, (3) off-gas, (4) a scrub solution such as a sodium hydroxide solution, (5) steps in the process of scrubbing the off-gas, (6) scrub solution after completion of off-gas scrubbing, (7) additives, (8) a precipitation step, (9) a freeze vacuum drying step, (10) an iodine compound recovery step, (11) a storage step, (12) an ingredient preparation step, (13) a mineralizing step, (14) a preservation step, (15) a water and nitric acid treatment step, (16) a reutilization step, (17) a discharge step, (18) scrubbed off-gas, (19) a radioactivity capture step, and (20) a discharge step.

In the Figure, spent fuel is sheared at step (1) at a retreatment facility. Off-gas containing the radioactive iodines ¹²⁹I of long half-life and ¹³¹I of short half-life produced at the dissolving step (2) is scrubbed at the off-gas scrubbing step (5) by the scrub solution (4) such as sodium hydroxide and recovered in cleaned off-gas scrub solution (6) through generation of radioactive iodines NaI, NaIO₃. Meanwhile cleaned off-gas (18) containing unrecovered radioactive iodines in scrub solution (6) is released into the environment at the discharge step (20) after removal of iodines at step (19) through a radioactive iodine capturing substance such as silver zeolite.

The solution in the dissolving step (2) is treated in a solvent extraction process.

Clean off-gas scrub solution (6) containing radioactive iodines is put through the scrub solution precipitating step (8) by adding copper and silver additives (7) as necessary, and radioactive iodines are separated from the solution by the formation of such precipitates as copper iodide or silver iodide. It should be noted that this treatment can be omitted since the compound of Na and iodine will undergo almost no decomposition by a low-temperature treatment (below).

Next, when either cleaned scrub solution (6) containing radioactive iodine or liquids containing precipitate remaining after settling of the scrub solution is treated by freeze drying at the freeze vacuum drying step (9), water and nitrates sublime and are separated, and radioactive iodine (10) is recovered as iodine compounds (NaI, NaIO₃, CuI, AgI, etc.) in the form of residue. Under these conditions, freezing is eliminated, but no vaporization takes place since recovery is achieved in the form of iodine compounds. When necessary, the recovered iodine compounds containing radioactive iodine are made by adding suitable compounds, either directly or after being temporarily stored at the storage step (11), to have the same composition as natural, stable iodine-containing minerals (e.g. Chile saltpeter, Dictzeir, Jodyrite and Mitertite). After adjustment of ingredients at step (12), or without such adjustment, mineralization is performed by a high-pressure press or the like at the mineralization step (13), and the results are preserved as a mineral at step (14). Storage is thus possible in a stable mineral state.

Meanwhile, sublimation is carried out at the freeze vacuum drying step (9), and water and nitric acid trapped and recovered at the water and nitric acid treatment step (15) containing almost no radioactive iodine are either utilized again at step (16) or released at step (17).

The following advantages are achieved according to the present invention:
(i) When processing liquids containing radioactive iodines by a freeze vacuum drying process, the radioactive iodines are not vaporized. Therefore, it is possible to eliminate release of ¹²⁹I radioactive iodine into the environment. Owing to its long half-life, such release of radioactive iodine into the environment would cause problems.
(ii) When treating liquids containing radioactive iodines by freeze vacuum drying, radioactive iodine is not vaporized. This makes it possible to reduce the consumption of collecting agents such as silver zeolite that are used to collect vaporized radioactive iodine.
(iii) By treating liquids containing radioactive iodines individually without allowing mixing with waste liquids free from radioactive iodine generated at a retreatment process, it is possible to maintain alkalinity at all times so there is no chance of causing vaporization of radioactive iodine by mistake.
(iv) It is possible to store long half-life ¹²⁹I radioactive iodine safely for an extended period by sealing recovered radioactive iodine in stable minerals for a long period of time.
(v) It is possible to prevent vaporization of radioactive iodine and recover the same by adding silver ions, copper ions or the like to the liquid containing the radioactive iodine, causing precipitation of the compounds of additive and radioactive iodine, and separating the radioactive iodine from solution.

## Claims

1. A method of recovering radioactive iodine in a spent fuel retreatment process comprising scrubbing generated off-gas, subsequently freeze drying by a freeze vacuum drying process a cleaned scrub solution or a solution which contains a precipitate obtained by adding an additive to the scrub solution, and recovering radioactive iodine as iodine compound.

2. A method as claimed in claim 1, wherein scrubbing of the off-gas is carried out by using sodium hydroxide solution, and copper and silver ions are added as the additive in the precipitation treatment.

3. A method as claimed in claim 1 or 2 and further comprising solidifying and mineralizing recovered iodine compound directly or after adjusting the constituents of the recovered compound so as to obtain a composition corresponding to that of a naturally occurring iodine-containing mineral.

4. A method as claimed in claim 3, wherein the solidification is performed with the use of a high-pressure press.

## Patentansprüche

1. Verfahren zum Rückgewinnen von radioaktivem Iod in einem Wiederaufarbeitungsverfahren für abgebrannten Brennstoff, umfassend das Waschen von erzeugtem Abgas, anschließend Gefriertrocknen einer gereinigten Waschlösung oder einer Lösung, die einen Niederschlag enthält, der durch Zugabe eines Additivs zu der Waschlösung erhalten wurde, durch ein Vakuum-Gefriertrocknungsverfahren, und Rückgewinnen von radioaktivem Iod als Iodverbindung.

2. Verfahren nach Anspruch 1, worin das Waschen des Abgases ausgeführt wird durch Verwendung von Natriumhydroxidlösung, und Kupfer- und Silberionen als Additiv in der Ausfällungsbehandlung zugegeben werden.

3. Verfahren nach Anspruch 1 oder 2, welches ferner umfaßt das Verfestigen und Mineralisieren von rückgewonnener Iodverbindung direkt oder nach dem Einstellen der Bestandteile der rückgewonnenen Verbindung, um eine Zusammensetzung zu erhalten, die der eines natürlich vorkommenden iodhaltigen Minerals entspricht.

4. Verfahren nach Anspruch 3, worin die Verfestigung unter Verwendung einer Hochdruckpresse durchgeführt wird.

## Revendications

1. Un procédé de récupération d'iode actif dans un processus de retraitement de combustible usé comprenant un lavage des effluents gazeux générés, puis une lyophilisation par une opération de lyophilisation sous vide d'une solution de lavage nettoyée ou d'une solution contenant un précipité obtenu par addition d'un additif à la solution de lavage, et une récupération d'iode actif sous forme de composé iodé.

2. Un procédé selon la revendication 1, dans lequel le lavage des effluents gazeux est effectué par l'utilisation d'une solution d'hydroxyde de sodium, et des ions de cuivre et d'argent sont additionnés dans le traitement de précipitation.

3. Un procédé selon la revendication 1 ou la revendication 2 comprenant en outre la solidification et la minéralisation du composé iodé récupéré, directement ou après ajustement des constituants du composé récupéré afin d'obtenir une composition corresporidant à celle d'un minéral contenant de l'iode que l'on rencontre à l'état naturel.

4. Un procédé selon la revendication 3, dans lequel la solidification est effectuée par une presse haute pression.
